# EUROPÄISCHE PATENTSCHRIFT

(11) **EP 1 445 242 B1**
(45) Veröffentlichungstag und Bekanntmachung des Hinweises auf die Patenterteilung: **26.11.2008**
(21) Anmeldenummer: 04450023.9
(22) Anmeldetag: 05.02.2004
(51) Int. Cl.: C04B 28/26, C04B 41/50

(54) **Putz bzw. Beschichtung für Fassaden**
Coating for façades
Revêtement pour des façades

(30) Priorität: 06.02.2003 AT 1832003
(43) Veröffentlichungstag der Anmeldung: 11.08.2004
(73) Patentinhaber: Wopfinger Baustoffindustrie GmbH, 2754 Waldegg (AT)
(72) Erfinder: Lorenz, Jürgen, 2753 Markt-Piesting (AT)
(74) Vertreter: Pawloy, Peter Michael

(56) Entgegenhaltungen:
- EP-A- 0 196 602
- EP-A- 0 285 771
- GB-A- 652 766
- CHEMICAL ABSTRACTS + INDEXES, AMERICAN CHEMICAL SOCIETY. COLUMBUS, US, 30. Dezember 1991 (1991-12-30), XP000283038 ISSN: 0009-2258
- CHEMICAL ABSTRACTS + INDEXES, AMERICAN CHEMICAL SOCIETY. COLUMBUS, US, 11. August 1986 (1986-08-11), XP000213297 ISSN: 0009-2258
- CHEMICAL ABSTRACTS + INDEXES, AMERICAN CHEMICAL SOCIETY. COLUMBUS, US, Bd. 26, Nr. 89, 25. Dezember 1978 (1978-12-25), XP000063944 ISSN: 0009-2258
- CHEMICAL ABSTRACTS + INDEXES, AMERICAN CHEMICAL SOCIETY. COLUMBUS, US, 26. Januar 1987 (1987-01-26), XP000064565 ISSN: 0009-2258

## Beschreibung

Die Erfindung bezieht sich auf einen Putz bzw. eine Beschichtung für Fassaden.

Bisherige Beschichtungen für Fassaden, wie Putze und Farben sind wasserabweisend und besitzen eine bestimmte Oberflächenrauhigkeit, in der sich Schmutzpartikel festsetzen können. Die Schmutzpartikel bestehen aus anorganischen Komponenten und Ruß mit Teilchengrößen von bis zu 10 µm und werden in den Poren adsorbiert. Die Oberfläche der auf dem Markt befindlichen Putzsysteme und Beschichtungen sind, durch geeignete Hydrophobierungsmittel, wasserabweisend eingestellt, so daß anhaftende Schmutzpartikel durch Wasser nicht ausreichend ab- bzw. ausgewaschen werden können.

In der DE 35 12 322 A1 ist ein Putz-System beschrieben, das bei der Bausanierung angewendet werden kann und aus einer auf das Mauerwerk aufgetragenen Spritzbewurfmörtel-Schicht und einer Sanierputz-Schicht besteht. Durch einen zwischen diesen beiden Schichten vorgesehenen Pufferputz mit geringen Anteilen an Hydrophobierungsmitteln und einem ausreichend hohen Anteil an saugfähigen Leichtzuschlägen soll das Einwandern von Anmachwasser aus dem Sanierputz in das Mauerwerk und der Transport von Salzen in den Sanierputz verhindert werden.

In der EP 0 285 771 A1 ist die Verwendung von Mischungen aus einem wasserlöslichen Diphosphat, einem anionischen Netzmittel sowie Alkalihydroxid als Dispergator beschrieben.

Beide Vorschläge können das Problem der Verschmutzung nicht lösen.

Im Dokument "Chemical Abstracts + Indexes, Bd. 26, Nr. 115, 30. Dezember 1991, XP000283038 ISSN: 0009-2258" ist eine Beschichtung für Oberflächen beschrieben, die neben Wasserglas, Wasser und Füllstoffen auch eine Polymerdispersion, Polyphosphate als Dispergiermittel, kolloidale Kieselsäure, Celluloseether, Fasern sowie hydrophobierende und benetzende Fettsäurederivate enthält. Diese Beschichtung soll für innere Oberflächen geeignet sein.

Die Erfindung hat es sich zum Ziel gesetzt, einen Putz bzw. eine Beschichtung für Fassaden zu schaffen, der bzw. die eine geringere Verschmutzungsneigung als die bekannten Putze bzw. Beschichtungen besitzt. Erreicht wird dies dadurch, daß sie auf Festkörper bezogen enthält
- 10-25%: Wasser
- 2 - 20%: Kaliwasserglas
- 0,5 - 5%: Kolloiddisperse pyrogene Kieselsäure
- 0,05 - 0,3%: Netzmittel
- 0,1 - 0,5%: Celluloseether
- 0,2 - 2%: Hydrophobierungsmittel
- 0,05-1%: Dispergierhilfsmittel
- 49 - 80%: Füllstoffe

Durch die Erfindung wird die Mikrorauhigkeit derart verringert, daß anhaftenden Schmutzpartikel nicht genügend Porenraum zur Verfügung steht bzw. die Poren zu klein sind. Die Porendurchmesser sind nun im Bereich ≤ 1,5 µm. Die Oberfläche bekommt einen glasartigen Charakter, wobei die oberste Schicht hydrophil wird und dadurch mit Wasser leichter benetzt werden kann, um Staub- und Schmutzpartikelchen abzuwaschen. Die gesamte Putzbeschichtung bleibt in Summe aber hydrophob. Die Wasserdampfdiffusion wird dadurch nicht beeinträchtigt

Füllstoffe können sein Quarzmehle und/oder Quarzkörnungsfraktionen und/oder Marmormehle und/oder Marmorkörnungsfraktionen.

Als Netzmittel und Dispergierhilfsmittel können Siliconate eingesetzt werden.

Auch Alkylphosphonate sind als Netzmittel möglich.

Es hat sich weiters als zweckmäßig erwiesen, wenn der erfindungsgemäße Putz bzw. die Beschichtung ferner enthält
- 0 - 6%: Kunstharzdispersion als Bindemittel
- 0-1%: Fasern.

Im Rahmen der Erfindung sind zahlreiche Abänderungen möglich. So ist z.B. die Wahl der Füllstoffe, aber auch der Hydrophobierungsmittel und Dispergierhilfsmittel veränderbar.

## Patentansprüche

1. Putz bzw. Beschichtung für Fassaden, **dadurch gekennzeichnet, daß** sie auf Festkörper bezogen enthält
10 - 25% Wasser
2 - 20% Kaliwasserglas
0,5 - 5% Kolloiddisperse pyrogene Kieselsäure
0,05 - 0,3% Netzmittel
0,1 - 0,5% Celluloseether.
0,2 - 2% Hydrophobierungsmittel
0,05 - 1% Dispergierhilfsmittel
49 - 80% Füllstoffe

2. Putz bzw. Beschichtung für Fassaden, **dadurch gekennzeichnet, daß** sie ferner enthält
0 - 6% Kunstharzdispersion als Bindemittel
0 - 1 % Fasern.

## Claims

1. A plaster, or coating, respectively, for facades, **characterised in that**, based on solids, it contains
10-25% of water
2-20% of potassium silicate,
0.5-5% of colloid-disperse pyrogenic silicic acid,
0.05-0.3% of wetting agent,
0.1-0.5% of cellulose ether,
0.2-2% of hydrophobing agent,
0.05-1% of dispersant,
49-80% of fillers.

2. A plaster, or coating, respectively, for facades, **characterised in that that** it further comprises
0-6% of synthetic resin dispersion as a binder,
0-1% of fibers.

## Revendications

1. Crépi respectivement revêtement pour façades, **caractérisé en ce qu'**il contient par rapport au corps solide
10 à 25 % d'eau
2 à 20 % de silicate de potasse
0,5 à 5 % d'acide silique pyrogène en dispersion colloïdale
0,05 à 0,3 % d'agent mouillant
0,1 à 0,5 % d'éther de cellulose
0,2 à 2 % de produit imperméabilisant
0,05 à 1 % d'agent auxiliaire dispersant
49 à 80 % de matières de charge

2. Crépi respectivement revêtement pour façades,
**caractérisé en ce qu'**il contient également
0 à 6 % de dispersion de résine synthétique comme liant
0 à 1 % de fibres.
